# EUROPEAN PATENT SPECIFICATION

(11) **EP 2 060 057 B1**
(45) Date of publication and mention of the grant of the patent: **06.01.2016**
(21) Application number: 07804224.9
(22) Date of filing: 12.09.2007
(51) Int. Cl.: H04L 9/26, G06F 7/58

(54) **RANDOM NUMBER GENERATION**
ZUFALLSZAHLENERZEUGUNG
GÉNÉRATION DE NOMBRE ALÉATOIRE

(30) Priority: 13.09.2006 GB 0618019; 13.09.2006 EP 06270084
(43) Date of publication of application: 20.05.2009
(73) Proprietor: Airbus Defence and Space Limited, Stevenage Hertfordshire SG1 2AS (GB)
(72) Inventor: OMAR, Emam, Stevenage Hertfordshire SG1 2AS (GB); BENNIE, Peter, Stevenage Hertfordshire SG1 2AS (GB); GLANFIELD, James Stuart, Portsmouth Hampshire PO4 8AT (GB)
(74) Representative: Hewett, Jonathan Michael Richard
(86) International application number: PCT/GB2007/003427
(87) International publication number: WO 2008/032044

(56) References cited:
- WO-A2-2004/095199
- US-A1- 2006 069 706
- TANG H H K: "Nuclear physics of cosmic ray interaction with semiconductor materials: particle-induced soft errors from a physicist's perspective" IBM JOURNAL OF RESEARCH AND DEVELOPMENT IBM USA, vol. 40, no. 1, January 1996 (1996-01), pages 91-108, XP002411733 ISSN: 0018-8646
- CLAY R W ET AL: "The distribution of time intervals between cosmic ray showers-a study of the randomness of cosmic ray arrival times" AUSTRALIAN JOURNAL OF PHYSICS AUSTRALIA, vol. 33, no. 4, October 1980 (1980-10), pages 753-756, XP002411734 ISSN: 0004-9506
- JAMES F: "Comment on "Exact solutions to chaotic and stochastic systems" [chaos 11, 1 (2001)]" CHAOS AIP USA, vol. 13, no. 1, March 2003 (2003-03), page 123, XP002411735 ISSN: 1054-1500

## Description

This invention relates to random number generation and in particular to the generation of random numbers for use in cryptography for secure communications to spacecraft or craft positioned or travelling on the edge of space. The word "space" is used hereafter to mean space or a region relatively near Earth or another planet but which is substantially outside an ionosphere of that planet and the word "spacecraft" means a craft positioned or travelling in space as thus defined.

Secure communications, whether between two or more spacecraft or between a spacecraft such as a satellite and the Earth or some other planet, are used for reasons of commercial secrecy. Key to one method of cryptographic communication is the generation of random numbers. Random numbers can also be useful in other fields, for example gambling, virus-protection etc but the use envisaged in this invention is cryptographic communication.

It is known for certain Earth-space cryptographic communication applications to use so-called symmetrical key encryption of communications between, say, a satellite and a ground station. In this method the same numerical key is stored at both the ground station and on the satellite. The key is unknown to others and a relatively secure link is possible using this method.

As the number of bits in the numerical key progressively increases, the effectiveness of a symmetrical key arrangement as compared to an asymmetric key agreement scheme is likely to reduce. An asymmetric key agreement scheme is where the communicating stations each generate a random number to be used to generate a key. A series of communication exchanges between the stations then takes place using a known algorithm. Although these communications between the stations can be intercepted by any interested third party, the third party knows neither of the selected asymmetric random numbers. Each station knows its own random number only. The mathematical process used between the stations enables a single secure key to be established which cannot be calculated by an observer. This process therefore depends upon the generation by each communicating party of a secure random number.

In order to use a key agreement scheme between a spacecraft and a ground station, it would be necessary for a random number to be generated on the spacecraft. For example, if a pseudorandom number were generated by a linear feedback shift register (LFSR), no matter how many bits the shift register contained, the number would not be considered sufficiently secure because It has a known starting position and follows a known pattern.

It is an object of the invention to provide a means of establishing a random number, ie, a number whose pattern cannot be determined, which means can be used on a spacecraft.

It is also an object of the invention to provide a means of obtaining a secure cryptographic key while on a spacecraft.

According to one aspect of the present invention there is provided a method of generating a random number on a spacecraft including the steps of providing a device having an output capable of outputting a series of bits wherein the output series of bits is susceptible to change following impact on the device of particles of radiation which occur freely in space, exposing the device to said radiation for a period sufficient to change at least one of the bits, and reading from the output the series of bits as changed by the said radiation whereby to produce the random number.

The method thus provides a means of generating a truly random number, in space, by using the naturally-occurring phenomenon of random space radiation such as cosmic rays. "Heavy ions" have long been known to cause bit flips in an electronic device such as a random access memory ("RAM") when they pass through it. Such events have been named "single event upsets" or "SEUs". In order for such SEUs to occur it is currently thought that the spacecraft has to be a distance of approximately 700km above the Earth to be sufficiently out of the Earth's influence to allow the radiation to be effective, at least with currently known devices.

The invention seeks to harness this phenomenon in a manner which provides a relatively cheap and simple-to-implement on-board process which is reliable and effective. The RAM and any other apparatus needed may be implemented, preferably in software alone, on a field programmable gate array ("FPGA") or an application specific integrated circuit ("ASIC") so cost, volume and weight are kept to a minimum. It is believed that other solutions to the problem of generating a random number on a spacecraft would involve the use of more hardware. This would add weight and would increase power consumption and would require qualification of the hardware and therefore be more expensive.

Thus the device may be a RAM and the step of reading from the device may comprise interrogating the RAM.

The method may include the step of providing a pseudorandom number generator to propagate a sequence of bits, readable as an output, and connecting the device to an input of the pseudorandom number generator whereby each change in output of the device will be propagated by the pseudorandom number generator. The pseudorandom number generator may conveniently be an LFSR and the step of propagating the change in the state, or output, of the device may include feeding back the output of the LFSR into the device.

The step of propagating the change in the output of the device may include the steps of:-
a) reading, from a first RAM address, the stored bits therein;
b) using the stored bits as seed values of the LFSR;
c) clocking the LFSR;
d) reading from a second RAM address the stored bits therein;
e) reading the bits output from the LFSR upon the clocking thereof;
f) combining the stored bits from the second RAM address with the bits output from the LFSR and inputting the result into the first RAM address;
g) reading from the second RAM address the stored bits therein and inputting the stored bits into the input of the LFSR;
h) clocking the LFSR;
repeating steps c) to h) for successive RAM addresses until a final RAM address is reached whereupon reading the first RAM address as the next successive RAM address and, when required,
interrupting steps c) to h) to successively clock the LFSR a required number of times to read out a series of bits of required length from the output of the LFSR.

This process has the effect of propagating as much as possible changes at the RAM output due to the bit-flips which have occurred as a result of the SEUs. The output of the LFSR is thus very different from the output of the RAM. A high clock speed, combined with a large number of bits in the RAM and in the LFSR has the effect of making available extremely long random numbers which are thus suitable to be used in the setting up of a cryptographic key, for example in an asymmetric key agreement, or key exchange, scheme.

The method may include setting the rate of clocking of the LFSR and a time period for which the method is operated before a random number is read out whereby to ensure a desired degree of change from a seed value existing in the LFSR at commencement of the method.

The device may be selected from the group: electronic and optical and also from the group: analogue and digital. Thus the principle of the invention - single event effects ("SEEs") causing changes in a device - can apply equally well to electronic or optical devices and to analogue or digital devices. If an analogue device were chosen it is possible that the changes due to SEEs would be occurring much more frequently than with a digital device as the SEE does not have to have sufficient force to cause a bit flip, only a small, perhaps instantaneous, change in state. A small change due to an SEE could then be detected, amplified and turned into a digital signal. There is no reason why any common analogue device with appropriate sensitivity should not be used, eg., resistor, capacitor, diode, inductor.

The use of a RAM in the preferred method and apparatus will of course store the change of state caused by the SEU, so interrogation at a later time will pick up an SEU-induced change. A RAM, for use in space, has the advantage that it is freely available, relatively cheap, lightweight (especially when implemented in a microchip) and likely to be available in space-qualified form.

The RAM and the LFSR may advantageously be incorporated into in a single microchip. Alternatively, say if a larger memory is required to harness bit-flips at a higher rate, the RAM may be formed separately, say in another microchip.

Advantageously the LFSR is provided with sufficient bit storage such that the total number of bits which may be generated by the LFSR before repeat is of far greater length than any single number which would be required to be read from the LFSR. For the purposes of generating a random number for use in obtaining a cryptographic key, a Samsung (Reg. trade mark) K6R4008CID RAM of 4 million bits was selected. With SEUs predicted to occur once every 15,000 days for each bit, when in geostationary orbit. The overall bit-flip rate for the RAM would be once every 5.4 minutes. Thus, in a one hour period 11.1 bit-flips would be expected. With a clocking rate of 1 MHz, each bit address would be read 6866 times in one hour. This would provide as random a number as would be likely to be needed.

According to a second aspect of the invention there is provided a method of obtaining, while on a spacecraft, a secure cryptographic key including the steps of providing, on the spacecraft, a device capable of producing random information when subject to random space phenomena, obtaining said random information and producing a random number therefrom, and executing an algorithm whereby to establish the secure key.

Other types of random space phenomenon are envisaged which would be possible to use in the invention.

According to third aspect of the invention there is provided spacecraft communication apparatus incorporating a device to generate random numbers, the device having an output capable of outputting a series of bits wherein the output series of bits is susceptible to change following impact on the device of packets of radiation which occur freely in space to enable the device to produce a random number, means connected to the device to communicate with a communication station remote from the apparatus and means to utilize the random number in the determination of a secure cryptographic communication key for communicating with the remote communication station.

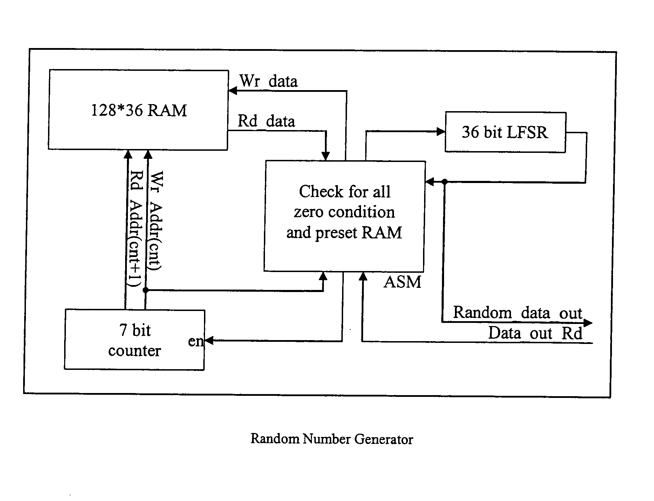

The invention will now be described by way of example with reference to the accompanying drawing.

According to the invention, spacecraft communication apparatus for communicating either with another spacecraft, e.g. a satellite, or a ground station on Earth or another planet is operable from a satellite in orbit to generate, when required, a random number for use in a cryptographic numerical key to enable secure communication from the satellite.

The invention lies in an apparatus and method for generating such a random number and for generating the secure cryptographic key to allow for the aforesaid secure communication. The random number generating part of the invention is illustrated in the drawing in block diagram form. A central algorithmic state machine (ASM) is operationally linked to a 4 megabit random access memory (RAM), a linear feedback shift register (LFSR) and a counter. The read and write links between the RAM and the ASM, on one hand, and the RAM and the counter, on the other hand, can be seen in the drawing. In addition the feedback from the LFSR, through the ASM to the RAM can be seen.

The invention is designed to use bit-flips experienced by the RAM when in space to produce truly random numbers, i.e. numbers whose pattern cannot be determined by an observer. The LFSR is implemented in sequential logic on a micro-chip and is used in conjunction with the RAM to ensure that bit-flip single event upsets (SEUs) are propagated.

In operation, each memory location in the RAM is read out in turn and loaded in the LFSR. The LFSR is then clocked once and each value is combined with the data at another RAM location and written back to the RAM. The LFSR is large enough in bit storage such that any practical required number of bits can be read out from it before the pattern starts to repeat (even assuming no SEUs have occurred in the RAM in the meantime).

Each RAM address will have a seed value written to it initially (any non zero value). Then each address in turn will be read out and stored in registers of an LFSR, conveniently a 36 bit LFSR. After the LFSR is clocked, the output is combined (via an XOR gate) with the data at the next successive RAM address and written back to the original RAM address. This process is continuous and after a given time the data in the RAM will be completely unpredictable and therefore random. Whenever a random number is required to be output from the apparatus, the above process is stopped and as many bits as are required are read out from the LFSR. With a 36 bit LFSR approximately 68 billion bits may be output before repeat occurs (even without SEUs occurring). Such pseudo-random outputs are also effectively random without any bit-flips occurring in the RAM so long as the exact time at which the sequence started and finished is not known and more so if the apparatus operates at a high clock rate.

As can been seen from the drawings, the ASM also constantly checks for the all zero condition in the RAM. If this condition occurs, the RAM will not operate. If such a condition is detected the ASM resets the RAM location to a known non-zero value.

When in operation, the apparatus acts as a large and complex random number generator. Each time an SEU occurs in the RAM it changes the pattern of the data stored in the RAM. As this data is output to the LFSR a small change in the data output from the RAM has a very large effect on the data being output from the LFSR.

Some sample computer code using a small internal RAM to carry out the method of the invention is set out below as an Annexe.

### ANNEXE

```
 library IEEE;
 use IEEE.std_logic_1164.all;
 use IEEE.numeric_std.all;
 use IEEE.std_logic_unsigned.all;
 entity Top_level_RNG is
    port (Sysclock : in std_logic;
           Resetz : in std_logic;
           Data_out_RD : in std_logic;
           Random_data_out : out std_logic);
 end Top_level_RNG;
 architecture rtl of Top_level_RNG is
 component RAM_128_36
    port(Data in std_logic_vector(35 downto 0);
           Q : out std_logic_vector(35 downto 0);
           WAddress : in std_logic_vector (6 downto 0);
           RAddress : in std_logic_vector (6 downto 0);
           WE : in std_logic;
           RE : in std_logic;
           WClock : in std_logic;
           RClock : in std_logic);
           end component;
           signal
           Wr_data,Rd_data,LFSR_data_in,LFSR_data_out,LFSR_data,Wr_data_int :
           std_logic_vector (35 downto 0);
           signal count,count_plus_1 : std_logic_vector (6 downto 0);
           signal current_state,next_state : std_logic_vector (1 downto 0);
           signal WE,RE,count_en : std_logic;
           Begin
           --RAM port map
           Actel_RAM_128_36 : RAM_128_36 port map(Data=>Wr_data,Q=>Rd_data,
    WAddress=>count,RAddress=>count=>plus_1,WE=>WE,RE=>RE,
    WClock=>Sysclock,RClock=>Sysclock);
    --7 bit address counter
    Process (sysclock,resetz)
    Begin
    if resetz = '0' then
  count <= (others=>'0');
  elsif rising_edge(sysclock) then
  if count_en = '1' then
    count <= count_plus_1;
  end if;
  end if;
  end process;
  count_plus_1 <= count + '1';
  --LFSR registers
 process (sysclock,resetz)
 Begin
 if resetz = '0' then
   LFSR_data <= (others=>101);
 elsif rising_edge(sysclock) then
   LFSR_data <= LFSR_data_in;
 end if;
 end process;
 --LFSR Feedback taps
 LFSR_data_out(35 downto 1) <= LFSR_data(34 downto 0);
 LFSR_data_out(0) <= LFSR_data(35) Xor LFSR_data(24);
 --The output is combined with the next input, with an xor gate
 Wr_data_int <= LFSR_data_out xor Rd_data;
 --state machine registers - 2 bit
 process (sysclock,resetz)
 Begin
 if resetz = '0' then
  current_state <= (others=>'0');
 elsif rising_edge(sysclock) then
  current_state <= next_state;
 end if;
 end process;
 --Main state machine
 process
 (current_state,count,Rd_data,LFSR_data_out,Data_out_RD,LFSR_data,Wr_da
 ta_int)
 begin
 next_state <= "00";
 WE <= '0';
 RE <= '0';
 count_en <= '0';
 LFSR_data_in <= (others=>'0');
 Wr_data <= (others=>'0');
 Random_data_out <= '0';
 case current_state is
 --All locations in RAM are set to the default number
 when "00" =>
 count_en <= '1';
 WE <= '1';
 Wr_data <= "001010000101101000101001000001011111";
 if count = "1111111" then
  next_state <= "01";
  else
  next_state <= "00";
  end if;
  --Allow a clock for the first read back data to be output from the RAM
  when "01" =>
  RE <= '1';
  next_state <= "10";
  --Allow a clock for the read back data to propagate through the LFSR
  when "10" =>
  RE <= '1';
 LFSR_data_in <= Rd_data;
 next_state <= "11";
 --Loop back continously monitoring for the very unlikely all zero
 condition
 --unless the output is being read then hold until it has finished
 when "11" =>
 next_state <= "11";
 if Data_out_RD = '1' then
  Random_data_out <= LFSR_data(35);
  LFSR_data_in <= LFSR_data_out;
 else
  count_en <= '1';
  WE <= '1';
  RE <= '1';
  LFSR_data_in <= Rd_data;
  if Wr_data_int = "000000000000000000000000000000000000" then
    Wr_data <= "001010000101101000101001000001011111";
  else
    Wr_data <= Wr_data_int;
  end if;
 end if;
 when others =>
  null;
 end case;
 end process;
 end RTL;
```

## Claims

1. A method of generating a random number on a spacecraft including the steps of:-
providing a RAM having an output capable of outputting a series of bits
wherein the output series of bits is susceptible to change following impact on the RAM of particles of radiation which occur freely in space;
exposing the RAM to said radiation for a period sufficient to change at least one of the bits, and
reading from the output the series of bits as changed by the said radiation whereby to produce the random number.

2. A method as in claim 1 including the step of providing a pseudorandom number generator to propagate a sequence of bits readable as an output and connecting the RAM to an input of the pseudorandom number generator whereby each change in output of the RAM will be propagated by the pseudorandom number generator.

3. A method as in claim 2 in which the step of providing the pseudorandom number generator involves providing a LFSR and in which the step of propagation of the change in the output of the RAM includes feeding back the output of the LFSR into the RAM.

4. A method as in claim 3, in which the step of propagating the change in the output of the RAM includes the steps of:-
a) reading from a first RAM address the stored bits therein;
b) using the stored bits as seed values of the LFSR;
c) clocking the LFSR;
d) reading from a second RAM address the stored bits therein;
e) reading the bits output from the LFSR upon said clocking thereof;
f) combining the stored bits from the second RAM address with the bits output from the LFSR and inputting the result into the first RAM address;
g) reading from the second RAM address the stored bits therein and inputting the stored bits into the input of the LFSR;
h) clocking the LFSR;
repeating steps c) to h) for successive RAM addresses until a final RAM address is reached whereupon reading the first RAM address as the next successive RAM address and, when required,
interrupting steps c) to h) to successively clock the LFSR a required number of times to read out a series of bits of required length from the output of the LFSR.

5. A method as in claim 4 including setting the rate of clocking of the LFSR and a time period for which the method is operated before a random number is read out whereby to ensure a desired degree of change from a seed value existing in the LFSR at commencement of the method.

6. A method as in any preceding claim in which the RAM provided is selected from the group: electronic and optical and further selected from the group:
analogue and digital.

7. A method as any preceding claim, when dependent upon claim 4, wherein the RAM and the LFSR are provided in a single microchip or wherein the RAM and the LFSR are each provided in the form of a microchip.

8. A method as any preceding claim, when dependent upon claim 4, including the step of providing the LFSR with sufficient bit storage such that the total number of bits which may be generated by the LFSR before repeat is of greater length than any single number required to be read from the LFSR.

9. A method of obtaining, while on a spacecraft, a secure cryptographic key including the steps of:-
providing, on the spacecraft, a RAM capable of producing random information when subject to radiation which occur freely in space;
exposing the RAM to said radiation for a period sufficient to change at least one of the bits;
obtaining said random information and producing a random number therefrom, and
executing an algorithm utilizing said random number whereby to establish the secure key.

10. Spacecraft communication apparatus incorporating a RAM to generate random numbers, the RAM having an output capable of outputting a series of bits wherein the output series of bits is susceptible to change following impact on the RAM of packets of radiation which occur freely in space to enable the RAM to produce a random number, means connected to the RAM to communicate with a communication station remote from the apparatus and means to utilize the random number in the determination of a secure cryptographic communication key for communicating with the remote communication station.

11. Spacecraft communication apparatus as in claim 10 including a pseudorandom number generator to propagate a sequence of bits at its output based upon a different sequence of bits applied to its input, said pseudorandom number generator having its input connectable to the output of the RAM whereby each change in output of the RAM will be propagated by the pseudorandom number generator.

12. Spacecraft communication apparatus as in claim 11 in which the pseudorandom number generator comprises an LFSR.

13. Spacecraft communication apparatus as in claim 12 in which the LFSR has bit storage capacity greater than any single sequence of bits to be read therefrom.

14. Spacecraft communication apparatus as in any of claims 10 to 13 in which the RAM is selected from the group: electronic and optical and further selected from the group: analogue and digital.

15. Spacecraft communication apparatus as in any of claims 12 to 14, wherein the RAM and the LFSR are both comprised in a single microchip or the RAM and the LFSR are each comprised in a microchip.

## Patentansprüche

1. Verfahren zum Erzeugen einer Zufallszahl an einem Raumfahrzeug, das die folgenden Schritte beinhaltet:
Bereitstellen eines RAM, der eine Ausgabe hat, die eine Reihe von Bits ausgeben kann, wobei die ausgegebene Reihe von Bits gegenüber Veränderungen nach einem Aufprallen von Strahlungsteilchen, die im Weltraum frei vorkommen, auf den RAM empfindlich ist;
Inkontaktkommenlassen des RAM mit der genannten Strahlung für einen Zeitraum, der ausreicht, um wenigstens eines der Bits zu verändern, und
Auslesen der Reihe von Bits, die von der genannten Strahlung verändert wurden, aus der Ausgabe, um dadurch die Zufallszahl zu erzeugen.

2. Verfahren nach Anspruch 1, das den Schritt des Bereitstellens eines Pseudozufallszahlengenerators zum Verbreiten einer Bitfolge, die als eine Ausgabe auslesbar ist, und des Verbindens des RAM mit einer Eingabe des Pseudozufallszahlengenerators, wodurch jede Veränderung der Ausgabe des RAM vom Pseudozufallszahlengenerator verbreitet wird, beinhaltet.

3. Verfahren nach Anspruch 2, bei dem der Schritt des Bereitstellens des Pseudozufallszahlengenerators das Bereitstellen eines LFSR beinhaltet und bei dem der Schritt des Verbreitens der Veränderung in der Ausgabe des RAM das Zurückführen der Ausgabe des LFSR in den RAM beinhaltet.

4. Verfahren nach Anspruch 3, bei dem der Schritt des Verbreitens der Veränderung in der Ausgabe des RAM die folgenden Schritte beinhaltet:
a) Auslesen aus einer ersten RAM-Adresse der darin gespeicherten Bits,
b) Nutzen der gespeicherten Bits als Startwerte des LFSR,
c) Takten des LFSR,
d) Auslesen aus einer zweiten RAM-Adresse der darin gespeicherten Bits,
e) Auslesen der vom LFSR nach Takten dieser ausgegebenen Bits,
f) Kombinieren der gespeicherten Bits aus der zweiten RAM-Adresse mit den vom LFSR ausgegebenen Bits und Eingeben des Ergebnisses in die erste RAM-Adresse,
g) Auslesen aus der zweiten RAM-Adresse der darin gespeicherten Bits und Eingeben der gespeicherten Bits in die Eingabe des LFSR,
h) Takten des LFSR,
Wiederholen der Schritte c) bis h) für nachfolgende RAM-Adressen, bis eine letzte RAM-Adresse erreicht wird, woraufhin die erste RAM-Adresse als die nächste nachfolgende RAM-Adresse ausgelesen wird, und, wenn erforderlich,
Unterbrechen der Schritte c) bis h), um das LFSR nacheinander so oft wie erforderlich zu takten, um eine Reihe von Bits erforderlicher Länge aus der Ausgabe des LFSR auszulesen.

5. Verfahren nach Anspruch 4, das das Einstellen der Taktrate des LFSR und einer Zeitspanne beinhaltet, für die das Verfahren betrieben wird, bevor eine Zufallszahl ausgelesen wird, um dadurch einen erwünschten Veränderungsgrad von einem Startwert, der zu Beginn des Verfahrens in dem LFSR besteht, sicherzustellen.

6. Verfahren nach einem der vorhergehenden Ansprüche, bei dem der bereitgestellte RAM aus der Gruppe: elektronisch und optisch ausgewählt wird und ferner aus der Gruppe:
analog und digital ausgewählt wird.

7. Verfahren nach einem der vorhergehenden Ansprüche, wenn abhängig von Anspruch 4, wobei der RAM und das LFSR in einem einzelnen Mikrochip bereitgestellt werden oder wobei der RAM und das LFSR jeweils in der Form eines Mikrochips bereitgestellt werden.

8. Verfahren nach einem der vorhergehenden Ansprüche, wenn abhängig von Anspruch 4, das den Schritt des Versehens des LFSR mit ausreichend Bitspeicherplatz beinhaltet, so dass die Gesamtzahl der Bits, die vor der Wiederholung von dem LFSR erzeugt werden können, eine größere Länge hat als irgendeine einzelne Zahl, die aus dem LFSR ausgelesen werden soll.

9. Verfahren zum Beschaffen eines sicheren kryptographischen Schlüssels, während an einem Raumfahrzeug, das die folgenden Schritte beinhaltet:
Bereitstellen eines RAM, der Zufallsinformationen erzeugen kann, wenn er Strahlung, die im Weltraum frei vorkommt, ausgesetzt wird, an dem Raumfahrzeug,
Inkontaktbringen des RAM mit der genannten Strahlung für einen Zeitraum, der ausreicht, um wenigstens eines der Bits zu verändern,
Erhalten der genannten Zufallsinformationen und Erzeugen einer Zufallszahl aus ihnen und
Ausführen eines Algorithmus unter Nutzung der genannten Zufallszahl, um dadurch den sicheren Schlüssel herzustellen.

10. Raumfahrzeugkommunikationsvorrichtung, die einen RAM zum Erzeugen von Zufallszahlen, wobei der RAM eine Ausgabe hat, die eine Reihe von Bits ausgeben kann, wobei die ausgegebene Reihe von Bits gegenüber Veränderungen nach einem Aufprallen von Strahlungspaketen, die im Weltraum frei vorkommen, auf den RAM empfindlich ist, um den RAM zu befähigen, eine Zufallszahl zu erzeugen, eine mit dem RAM verbundene Einrichtung zum Kommunizieren mit einer von der Vorrichtung fernen Kommunikationsstation und eine Einrichtung zum Nutzen der Zufallszahl bei der Ermittlung eines sicheren kryptographischen Kommunikationsschlüssels zum Kommunizieren mit der fernen Kommunikationsstation beinhaltet.

11. Raumfahrzeugkommunikationsvorrichtung nach Anspruch 10, die einen Pseudozufallszahlengenerator zum Verbreiten einer Bitfolge an seiner Ausgabe auf Basis einer anderen an seinen Eingang angelegten Bitfolge beinhaltet, wobei der genannte Pseudozufallszahlengenerator mit seinem Eingang mit der Ausgabe des RAM verbindbar ist, wodurch jede Veränderung der Ausgabe des RAM vom Pseudozufallszahlengenerator verbreitet wird.

12. Raumfahrzeugkommunikationsvorrichtung nach Anspruch 11, bei der der Pseudozufallszahlengenerators einen LFSR aufweist.

13. Raumfahrzeugkommunikationsvorrichtung nach Anspruch 12, bei der das LFSR eine Bitspeicherkapazität hat, die größer als irgendeine aus ihr auszulesende einzelne Bitfolge ist.

14. Raumfahrzeugkommunikationsvorrichtung nach einem der Ansprüche 10 bis 13, bei der der RAM aus der Gruppe:
elektronisch und optisch ausgewählt ist und ferner aus der Gruppe: analog und digital ausgewählt ist.

15. Raumfahrzeugkommunikationsvorrichtung nach einem der Ansprüche 12 bis 14, wobei der RAM und das LFSR beide in einem einzelnen Mikrochip enthalten sind oder der RAM und das LFSR jeweils in einem Mikrochip enthalten sind.

## Revendications

1. Procédé de génération d'un nombre aléatoire sur un engin spatial comportant les étapes consistant en :
la fourniture d'une RAM ayant une sortie capable de produire une série de bits, la série de bits produite étant susceptible de changer après l'impact sur la RAM de particules de rayonnement qui se produisent librement dans l'espace ;
l'exposition de la RAM audit rayonnement pendant une période suffisante pour changer au moins l'un des bits, et
la lecture à partir de la sortie de la série de bits modifiée par ledit rayonnement pour ainsi produire le nombre aléatoire.

2. Procédé selon la revendication 1 comportant l'étape de fourniture d'un générateur de nombres pseudo-aléatoires pour propager une séquence de bits lisible en tant que sortie et l'étape de connexion de la RAM à une entrée du générateur de nombres pseudo-aléatoires, moyennant quoi chaque changement de la sortie de la RAM sera propagé par le générateur de nombres pseudo-aléatoires.

3. Procédé selon la revendication 2, dans lequel l'étape de fourniture d'un générateur de nombres pseudo-aléatoires implique la fourniture d'un LFSR et dans lequel l'étape de propagation du changement de la sortie de la RAM comporte le renvoi de la sortie du LFSR dans la RAM.

4. Procédé selon la revendication 3, dans lequel l'étape de propagation du changement de la sortie de la RAM comporte les étapes consistant en :
a) la lecture depuis une première adresse de RAM des bits qui y sont mémorisés ;
b) l'utilisation des bits mémorisés comme valeurs de germe du LFSR ;
c) le cadencement du LFSR ;
d) la lecture depuis une deuxième adresse de RAM des bits qui y sont mémorisés ;
e) la lecture des bits produits par le LFSR lors de son dit cadencement ;
f) la combinaison des bits mémorisés de la seconde adresse de RAM aux bits produits par le LFSR et l'entrée du résultat dans la première adresse de RAM ;
g) la lecture depuis la deuxième adresse de RAM des bits qui y sont mémorisés et l'entrée des bits mémorisés dans l'entrée du LFSR ;
h) le cadencement du LFSR ;
la répétition des étapes c) à h) pour des adresses RAM successives jusqu'à ce qu'une dernière adresse de RAM soit atteinte, sur quoi la première adresse de RAM est lue comme l'adresse de RAM successive suivante et, le cas échéant,
l'interruption des étapes c) à h) pour cadencer successivement le LFSR un nombre de fois requis pour lire une série de bits d'une longueur requise à partir de la sortie du LFSR.

5. Procédé selon la revendication 4, comportant le réglage de la fréquence de cadencement du LFSR et d'une période de temps pendant laquelle le procédé est mis en oeuvre avant qu'un nombre aléatoire soit lu, de façon à garantir un degré de changement souhaité par rapport à une valeur de germe existant dans le LFSR au début du procédé.

6. Procédé selon l'une quelconque des revendications précédentes, dans lequel la RAM fournie est sélectionnée dans le groupe : électronique et optique et sélectionnée en outre dans le groupe : analogique et numérique.

7. Procédé selon l'une quelconque des revendications précédentes, dépendant de la revendication 4, dans lequel la RAM et le LFSR sont fournis dans une même micropuce ou dans lequel la RAM et le LFSR sont fournis chacun sous forme de micropuce.

8. Procédé selon l'une quelconque des revendications précédentes, dépendant de la revendication 4, comportant l'étape de fourniture au LFSR d'une mémoire binaire suffisante de telle sorte que le nombre total de bits pouvant être généré par le LFSR avant la répétition soit plus long que n'importe quel nombre unique devant être lu à partir du LFSR.

9. Procédé d'obtention, durant un vol d'engin spatial, d'une clé cryptographique sécurisée comportant les étapes consistant en :
la fourniture, sur l'engin spatial, d'une RAM capable de produire des informations aléatoires quand elle est soumise à un rayonnement se produisant librement dans l'espace ;
l'exposition de la RAM audit rayonnement pendant une période suffisante pour changer au moins l'un des bits ;
l'obtention desdites informations aléatoires et la production d'un nombre aléatoire à partir de celles-ci, et
l'exécution d'un algorithme en utilisant ledit nombre aléatoire pour ainsi établir la clé sécurisée.

10. Appareil de communication d'engin spatial incorporant une RAM pour générer des nombres aléatoires, la RAM ayant une sortie capable de produire une série de bits, la série de bits produite étant susceptible de changer après l'impact sur la RAM de paquets de rayonnement qui se produisent librement dans l'espace pour permettre à la RAM de produire un nombre aléatoire, des moyens connectés à la RAM pour communiquer avec une station de communication distante de l'appareil et des moyens pour utiliser le nombre aléatoire dans la détermination d'une clé cryptographique de communication sécurisée pour communiquer avec la station de communication distante.

11. Appareil de communication d'engin spatial selon la revendication 10 comportant un générateur de nombres pseudo-aléatoires pour propager une séquence de bits à sa sortie en fonction d'une séquence de bits différente appliquée à son entrée, l'entrée dudit générateur de nombres pseudo-aléatoires pouvant être connectée à la sortie de la RAM, moyennant quoi chaque changement de la sortie de la RAM sera propagée par le générateur de nombres pseudo-aléatoires.

12. Appareil de communication d'engin spatial selon la revendication 11, dans lequel le générateur de nombres pseudo-aléatoires comprend un LFSR.

13. Appareil de communication d'engin spatial selon la revendication 12, dans lequel le LFSR a une capacité de mémorisation binaire supérieure à n'importe quelle séquence de bits unique devant être lue à partir de celui-ci.

14. Appareil de communication d'engin spatial selon l'une quelconque des revendications 10 à 13, dans lequel la RAM est sélectionnée dans le groupe : électronique et optique et sélectionnée en outre dans le groupe : analogique et numérique.

15. Appareil de communication d'engin spatial selon l'une quelconque des revendications 12 à 14, dans lequel la RAM et le LFSR sont compris tous deux dans une même micropuce ou la RAM et le LFSR sont compris chacun dans une micropuce.
